# EUROPEAN PATENT APPLICATION

(11) **EP 3 504 961 A1**
(43) Date of publication of application: **03.07.2019**
(21) Application number: 17306973.3
(22) Date of filing: 29.12.2017
(51) Int. Cl.: A01G 17/02, A01G 3/04

(54) **PROCESS FOR PRUNING A ROW OF PLANTS SUPPORTED BY POSTS**

(71) Applicant: CNH Industrial France, 91150 Morigny-Champigny (FR)
(72) Inventor: PREAU, Nicolas, 85300 Soullans (FR); DE BOLLE, Lieven, 9030 Mariakerke (BE)
(74) Representative: Sayettat, Julien Christian

(57) **Abstract**

The invention relates to a process for pruning a row of plants supported by posts spaced by a distance d from each other along said row, using a machine comprising a straddling tunnel (5) equipped with a pruner (6) with two pruning harrows (7) disposed each on opposite sides of said tunnel and reversibly operable into an open state wherein they are moved apart, said process providing for driving the machine at a speed V along the row while keeping said row within the tunnel (5) to prune it from each side between the harrows (7) and for operating said harrows in their open state upon the passage of each post between them, the opening of the harrows (7) being operated by means of an automatic procedure (H) utilizing parameters determined by a previous learning stage (E) monitoring several successive manual openings (E1) of the harrows (7) to determine an opening time period (T_{ON}) necessary for the passage of a post at the driving speed V and an interval time period (T_{period}) separating said openings, said opening and interval time periods being applied during the automatic procedure (H).

## Description

The invention relates to a process for pruning a row of plants supported by posts which are spaced by a distance d from each other along said row, as well as a machine comprising means for implementing such a process.

Pruning machines are known, comprising a motorized chassis having a straddling tunnel equipped with two pruning harrows that are disposed each respectively on one side of said tunnel, so as to prune the top portion of the plants that are successively introduced within said tunnel as the motorized chassis is moved along the row.

Such pruning can be performed in particular in the general field of the cultivation of berries growing on trees or bushes, especially for fruits such as grapes, raspberries, red, white or blackcurrants. Indeed, especially for the field of vinification, it is interesting to remove parts of the branches and leaves to limit the production of grapes per plant, so as to improve their size and taste by managing the ratio between water and sugar.

In addition, before mechanically harvesting the berries, pruning could limit the quantity of undesirable pieces of branches and/or leaves that may be detached from the plants by the harvesting machine, and then mixed to said berries within the harvested crop.

As the plants of a row are generally supported by posts, it is necessary to avoid contact between the pruning harrows and said posts, so as to avoid risks of damage to said posts and/or to said harrows, as well as to avoid tearing of the threads extending between two adjacent posts for supporting said plants. To this end, the pruning harrows are reversibly operable in an open state wherein they are moved apart upon the passage of each posts between them.

Conventionally, the opening of the harrows is controlled manually by the operator driving the machine, in particular by actuating a button provided for that purpose on the control board of the driver station of said machines.

However, such manual actuation, in addition to implying important risks of erroneous operations of the harrows, is fastidious for the operator and also monotonous due to the constancy of the distance d between two adjacent posts along a row.

To overcome these drawbacks, automatic opening of the pruning harrows is known, for instance from document US-7 652 766, thanks to the implementation of at least one sensor, such as an optical sensor and/or a magnetic sensor, for detecting the passage of posts between the pruning harrows.

However, these solutions are not satisfactory, because the implementation of such sensors is relatively expensive and requires important maintenance to remain reliable upon pruning operations.

Moreover, the reliability of such sensors may be compromised depending on the shape of the vegetation and/or the nature of the posts. Thus, in case of old stems or an abundant vegetation, optical sensors may be inefficient for detecting the posts, which may be hidden by said vegetation or not be discernable therefrom. In the same way, magnetic sensors may be inefficient when the posts contain too little metallic components.

The invention aims to improve the prior art by proposing a process for pruning a row of plants by means of a motorized machine to be driven along said row, said process allowing for avoiding the contact of the pruning harrows with the posts in a simple, more reliable and less expensive manner, in particular by avoiding the implementation of complex sensor systems.

For that purpose, and according to a first aspect, the invention relates to a process for pruning a row of plants supported by posts which are substantially uniformly spaced by a distance d from each other along said row, said process using a machine comprising a straddling tunnel equipped with a pruner, said pruner comprising two pruning harrows disposed each on opposite sides of said tunnel, said harrows being reversibly operable into an open state wherein they are moved apart, said process providing for driving the machine at a speed V along the row while keeping said row within the straddling tunnel in order to prune it from each side between the pruning harrows and for operating said harrows in their open state upon the passage of each post between them, the opening of the pruning harrows being operated by means of an automatic procedure utilizing parameters which are determined by a previous learning stage monitoring several successive manual openings of the pruning harrows to determine an opening time period necessary for the passage of a post at the driving speed V and an interval time period separating said openings, said opening and interval time periods being applied during the automatic procedure.

According to a second aspect, the invention relates to a machine comprising a motorized chassis to be moved at a driving speed V along a row of plants supported by posts which are substantially uniformly spaced by a distance d from each other, said machine comprising a straddling tunnel operable for placing over said row during the movement of the machine, said straddling tunnel being equipped with a pruner comprising two pruning harrows disposed each on opposite sides of said tunnel in order to be able to prune the row from each side between the pruning harrows, said machine comprising a device for reversibly operating the harrows in an open state wherein they are moved apart, said device comprising control means operable for implementing such a process.

Other aspects and advantages of the invention will become apparent in the following description made with reference to the appended figures, wherein:
- figure 1 represents a front view of a pruning machine for implementing a process according to the invention;
- figure 2a represents schematically the steps of a process for pruning to be implemented by means of the machine of figure 1, figure 2b representing more particularly the steps of the learning stage of said process, as well as a chart representing in particular the determination of opening time periods during successive manual openings of the harrows; and
- figure 3 is a chart representing the states of the harrows and the corresponding applied opening and interval time periods during the automatic procedure.

With reference to these figures, we describe below a process for pruning a row of plants supported by posts which are substantially uniformly spaced by a distance d from each other along said row, as well as a machine comprising control means operable for implementing such a process.

To do so, the machine comprises a motorized chassis 1 that is equipped with a driver station 2 and that is movable along rows of plants, a pruning unit 3 being mounted onto a front portion of said structure for pruning a least one of said rows of plants.

The process is in particular operable in the field of farming of berries growing on trees or bushes, especially berries such as grapes, raspberries, red, white or blackcurrants, and other berries growing in bunches, in order to prune such trees or bushes, in particular prior to performing a harvesting procedure on said trees or bushes for recovering said berries.

In particular, the pruning unit 3 can be mounted onto the motorized chassis 1 permanently or removably, so as to be replaceable with other equipment and accessories, for example harvesting equipment, spraying equipment or equipment for working the soil.

The pruning unit 3 includes a straddling chassis 4 which delimits a straddling tunnel 5 into which the plants are successively introduced to move through said tunnel between respective openings at the front and at the rear of said tunnel. Moreover, the pruning unit 3 is equipped with a pruner 6 comprising two pruning harrows 7, said pruning harrows being disposed each on opposite sides of the straddling tunnel 5.

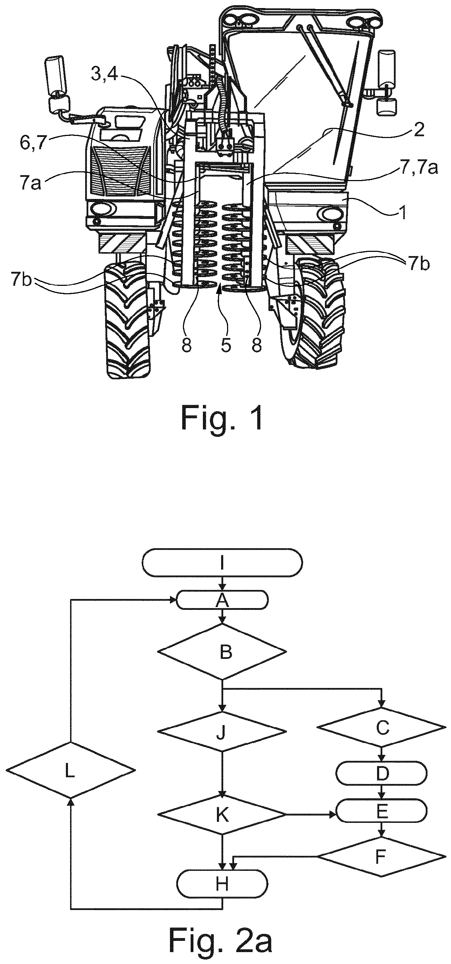

In the embodiment shown in figure 1, the pruning harrows 7 comprise each a vertical drive shaft 7a mounted in rotation around its revolution axis on respectively one side of the tunnel 5, as well as a stack of toothed cutting disks 7b arranged along said shaft to perform pruning on plants introduced within said tunnel when said shaft is moved in rotation.

The process provides for driving the machine at a speed V along a row of plants while keeping said row within the straddling tunnel 5, in order to prune said row from each side between the pruning harrows 7.

During the performing of the process, it is necessary to avoid contact between the pruning harrows and the posts supporting the plants, so as to avoid risks of damage to said posts and/or to said harrows, as well as to avoid tearing of the threads extending between two adjacent posts for supporting said plants.

To do so, the harrows are reversibly operable into an open state wherein they are moved apart, in particular by means of a dedicated device implemented within the machine for performing such reversible operation, the process providing, while driving the machine along a row of plants, for operating said harrows in their open state upon the passage of each post of said row between them.

The operating device may comprise vertical cradles 8, which are each pivotably mounted on the straddling chassis 4 on respectively one side of the tunnel 5 while supporting each respectively a rotating shaft 7a, said cradles being reversibly pivotable about their respective vertical axes to put the harrows 7 either in an open state or in a closed state, depending on the direction of rotation of said pivot movement.

The operation of the harrows 7 in their open state could be commanded manually by the operator of the machine. To do so, the operating device can in particular comprise a button for manually opening the harrows 7, said button being for example arranged on the control board in the driver station 2 of the machine, where the operator sits during the pruning operation.

In addition to this manual operation, the process provides for commanding the opening of the pruning arrow 7 by means of an automatic procedure H, which utilizes parameters which are determined by a previous learning stage monitoring several successive manual openings of said harrows in order to determine an opening time period T_{ON} necessary for the passage of a post at the driving speed V, and an interval time period T_{period} separating said openings, said opening and interval time periods being then applied during the automatic procedure H.

To this end, the operating device comprises means for performing such an automatic procedure H, in particular means for determining opening and interval time periods during several successive actuations of the opening button by the operator, as well as means for memorizing said measured time periods.

Thus, the process for pruning allows for avoiding the contact of the pruning harrows with the posts in a simple, more reliable and less expensive manner, in particular by avoiding the implementation of complex sensor systems.

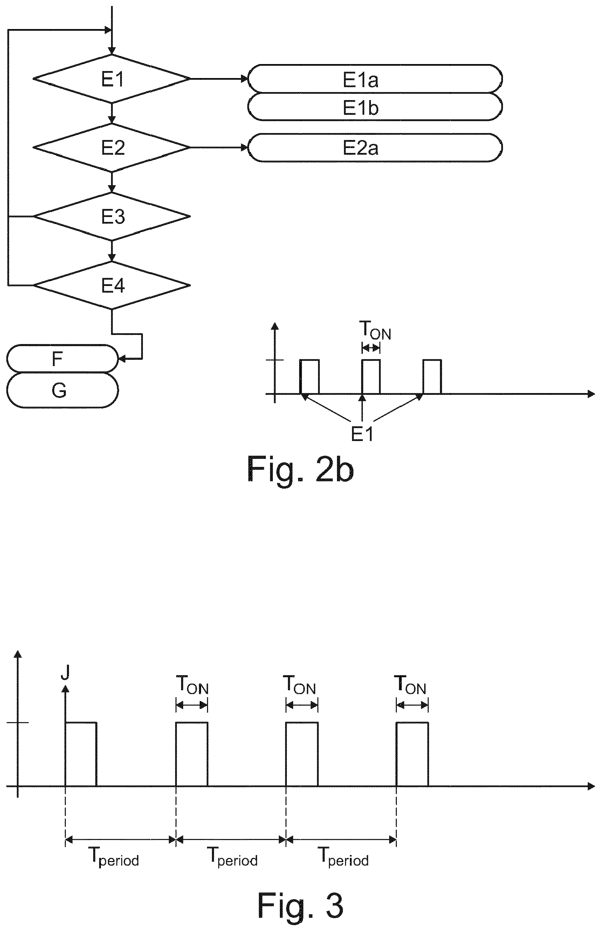

With reference to Figures 2a and 2b, we describe below in further detail an embodiment of the process of the invention, especially regarding the learning stage and the automatic procedure H.

The process comprises an initialisation step I, wherein in particular the operator starts the driving engine of the machine after having taken place in the driver station 2, for example for moving the machine towards the field of plants to be pruned, and more particularly for starting to drive said machine along a row of said plants.

Once the initialisation step I has been completed, the process further launches a next step A for starting the pruner 6, in particular by starting the rotation of the pruning harrows 7. To do so, the machine may comprise a dedicated button and/or lever arranged on the control board of the driver station 2, the operator actuating said button and/or lever for starting the pruner 6.

The process further comprises a step B for monitoring the functioning state of the pruner 6 and the driving speed V of the machine, said step being launched following the completion of the pruner starting step A. In particular, the monitoring step B can take place throughout the process for pruning, for alerting the operator in the event of a problem, for example through a dedicated indicator light, an audible alarm or any other communication means arranged in the driver station 2.

For determining the parameters of the automatic procedure H, in particular when the machine is used for the first time after a substantial time period, for example at the beginning of a pruning operation, the process provides for launching a previous learning stage E to determine opening and interval time periods T_{ON}, T_{period} to be applied during said automatic procedure H.

As illustrated in figure 2a, the process provides a step C for initiating the learning stage E, in particular through a manual action of the operator. To this end, the operating device can comprise a button for manually initiating the learning stage E, said button being in particular arranged on the control board in the driver station 2, the operator actuating said button during the learning stage initiation step C.

In particular, the learning stage E may be initiated after the verification that the driving speed V is within a given margin, for example a stored range of speeds that are coherent with a displacement of the machine along a row of plants for performing a pruning process. To this end, as represented in figure 2a, the learning stage initiation step C takes place after the monitoring step B.

The process can provide for deactivating the initiating button when the driving speed is not comprised within the given margin, for example when said speed is too low, or even null, or on the other hand when said speed is too high, which may correspond in particular to a travelling of the machine outside the field of plants, especially when moving between said field and a storage and/or maintenance location of the machine. Thus, as long as the driving speed V is not comprised within the given margin, actuations of the initiating button will not initiate the learning stage E.

In particular, the process can provide for notifying the operator about the possibility or not to initiate the learning stage E. For example, the process can provide for illuminating - not illuminating - the initiating button when the driving speed V is falling within - out of - the given margin. According to a variant, the process can provide for producing an error message when the operator actuates the initiating button while the driving speed V is out of the given margin, for example by emitting a dedicated sound or by displaying a text error message on the control board.

Once the learning stage E has been properly initiated, the process provides a step D for resetting opening and interval time periods T_{ON}, T_{period} that possibly were determined and memorized before the learning stage initiation step C, for example during a previous process for pruning. As represented in figure 2a, this resetting step D takes place after the learning stage initiation step C.

The process then provides for actually launching the learning stage E, so as to determine new opening and interval time periods T_{ON}, T_{period} to be applied during a further automatic procedure H. With reference to figure 2b, we describe below in further detail an embodiment of the achievement of the learning stage.

During the learning stage E, the operator normally performs successive manual opening operations of the pruning harrows 7 for avoiding contact with a post during the pruning of a row of plants, said learning stage providing for using said successive manual opening operations to determine the new opening and interval time periods T_{ON}, T_{period}.

According to an embodiment, the process may provide for measuring the opening and interval time periods T_{ON}, T_{period} during the learning stage E, and then to apply the averages of said measured time periods during the consecutive automatic procedure H. To do so, the operating device comprises means for measuring the opening and interval time periods T_{ON}, T_{period}, as well as means for calculating the averages of said measured periods, the means for memorizing of said operating device being adapted to memorize said averages for applying them during the consecutive automatic procedure H.

Advantageously, the process may provide for triggering the automatic procedure H after the completion of a predetermined number of manual opening operations of the pruning harrows 7 during the learning stage E, said number being established in order to have enough measured opening and interval time periods T_{ON}, T_{period} to calculate the most relevant averages. For example, the automatic procedure H may be triggered after the completion of four manual opening operations.

As shown in figure 2b, the learning stage E comprises a first step E1, wherein the operator manually performs an opening of the pruning harrows 7, in particular by actuating the opening button provided to that purpose on the control board in the driver station 2.

During this first step E1, the learning stage E launches in particular a sub-step E1 a for raising a counter number of manual opening operations. The first step E1 also launches a sub-step E1 b for starting the measuring of an interval time period T_{period}, as well as for raising a counter of the number of measured interval time periods T_{period}.

The learning stage E further comprises a second step E2, which is consecutive to the opening button actuating step E1, and wherein the operator maintains the actuation of said opening button for maintaining the pruning harrows 7 in the open state.

This second step E2 mainly provides for measuring the opening time period T_{ON} necessary for the passage of a post at the driving speed V of the machine, for example by measuring the time period during which the operator maintains the actuation of the opening button, which corresponds to said opening time period. Once the opening time period T_{ON} has been measured, the second step E2 launches a sub-step E2a for incrementing a counter of the number of measured opening time periods T_{ON}.

The learning stage E further comprises a third step E3 for checking the number of manual opening performed since the beginning of said learning stage, in particular by checking the counter increased during the first step E1, E1a.

Thus, if the number registered by the counter of manual opening operations is equal to the predetermined number necessary to trigger the automatic procedure H, then the process launches a step E4 for initiating said triggering. Otherwise, the learning stage E restarts a loop to monitor an additional manual opening operation and goes back to the first step E1, wherein the operator actuates the opening button again to perform said additional manual opening operation.

In particular, during the launching of this new loop, the new first step E1, during the sub-step E1b for measuring the interval time period T_{period}, stops the measuring of the interval time T_{period} that has been started during the preceding first step E1, i.e. during the preceding manual opening of the harrows 7, and the interval time period which has been measured is then memorized by the operating device.

The process can provide to notify the operator about the completion of the learning stage E, in particular when the required number of measured opening and interval time periods T_{ON}, T_{period} has been reached, or on the contrary about the requirement of an additional manual opening operation of the harrows 7 for allowing said completion. For example, the process can provide to emit a sound message and/or a visual message upon actuation of dedicated communication means on the control board.

To avoid the use of erroneous measured opening and/or interval time periods T_{ON}, T_{period}, in particular time periods T_{ON}, T_{period} corresponding to an erroneous actuation of the opening button or to measurements made while the machine is driving at a fluctuating speed V, the process can provide for triggering the automatic procedure H after the verification that the measured openings and/or interval time periods T_{ON}, T_{period} are within a given margin. For example, the learning stage E can check whether the variation of the measured time periods T_{ON}, T_{period} is within a margin of 15% of the respective time period value. Also, when the values of the driving speed V and the distance d between the posts are available to the system, the process can check whether the stored time periods T_{ON}, T_{period} are coherent respectively with the expected duration of a passage of a post between the harrows 7 at said driving speed V and the duration of a passage of the machine at said driving speed V within two consecutive posts in a row of plants. A similar margin of 15% may be held allowable.

To do so, as illustrated in figure 2b, the learning stage E comprises a fourth step E4 for performing such a verification, said step being consecutive to the step E3 for checking that the number of necessary measured time periods T_{ON}, T_{period} has been reached. Thus, if all of the measured time periods T_{ON}, T_{period} are within the required margin, the learning stage E launches a step F for validating said time periods, and in particular for calculating the averages of said time periods to be applied during the automatic procedure H. Otherwise, the learning stage E only memorizes the time periods T_{ON}, T_{period} comprised within the required margins and launches a new loop for new manual openings, in particular for obtaining the missing number of required and valid measured time periods T_{ON}, T_{period}.

The learning stage E can launch, in particular in parallel to its final validating step F, a step G for resetting the counter of the number of manual opening operations, in order to prepare the operating device to a possible further learning stage E.

In relation to figure 2a, once the learning stage E has completed its final step F for validating the measured time periods T_{ON}, T_{period}, the process provides for triggering the automatic procedure H wherein the averages of time periods calculated from said validated measured time periods will be used for automatically operating the harrows 7.

In particular, the process may provide for starting the automatic procedure H at an initial time which is manually triggerable, for example by the manual actuation by the operator of a dedicated button and/or lever on the control board in the driver station 2. The process may also provide for notifying the operator that the automatic procedure H is ready for triggering, especially after the completion of the learning stage E, for example through illuminating the button for launching said automatic procedure, and/or through other dedicated communication means provided on the control board and/or in the driver station 2.

The process may in particular provide for starting the automatic procedure H by an initial opening of the pruning harrows 7, said automatic procedure further applying the opening and interval time periods T_{ON}, T_{period} that were determined during the learning stage E for automatically opening the harrows 7 starting from this first opening.

According to an embodiment, the process may notably provide for triggering the automatic procedure H upon a last manual actuation of the opening button, said manual actuation triggering a manual opening of the harrows 7, which constitutes the initial opening as described above.

In particular, the automatic procedure H can be triggered at the beginning of the pruning process, notably after the completion of the pruner starting step A and the monitoring step B. To do so, in relation to figures 2a and 3, the process provides for launching a step J after the monitoring step B, wherein the operator may in particular actuate a dedicated button for triggering the automatic procedure H, and advantageously the button for opening the harrows 7.

Such a direct triggering of the automatic procedure H may notably be possible only if a learning stage E has been previously completed, and more particularly if said learning stage has been completed not too long before the pruner starting step A. For example, if the machine has been inactive for too long, especially since the last pruning or harvesting period, the opening and interval time periods T_{ON}, T_{period} memorized during the last learning stage E may be obsolete, and then not relevant for ensuring the pruning of the current rows of plants.

As represented in figure 2a, the process provides, once the operator has actuated the button for triggering the automatic procedure H, for launching a step K for checking the possible presence of valid time periods T_{ON}, T_{period} in the memorizing means of the operating device. Thus, if the memorizing means effectively comprise such valid time periods T_{ON}, T_{period}, the process launches directly the automatic procedure H after the completion of the step K by applying said valid time periods. Otherwise, the process launches a new learning stage E for obtaining new valid time periods T_{ON}, T_{period}.

The process may provide for a manual reset action for interrupting the automatic procedure H to manually operate the pruning harrows 7, in particular upon a manual actuation of the button for opening the harrows 7, which obviously results in a manual opening of said harrows. For example, if the human operator notes a synchronisation problem between the automatic sequence of time periods T_{ON}, T_{period} and the effective sequence of passages of posts within the straddling tunnel 5, said operator can actuate the button for manually opening the harrows 7. Then, as long as the operator presses the button, the automatic procedure H is on hold, until said operator releases said button, said automatic procedure being then restarted after said button release.

The process may also provide for a manual reset action for interrupting the automatic procedure H in order to complete a new learning stage E, especially if the human operator does not manage to resynchronise the current automatic procedure H with the effective sequence of passage of posts within the straddling tunnel. To do so, the operator can in particular press the button for initiating a new learning stage E, so that the process returns to dedicated steps C, D, E.

At the end of a pruning operation, for example once a row of plants has been pruned correctly, or even at the end of the pruning of a field and/or of the working day, the process may provide for a final step L for stopping the pruner 6, said step being in particular launched upon manual deactivation of said pruner by the operator, which notably allows to stop the automatic procedure H.

## Claims

1. Process for pruning a row of plants supported by posts which are substantially uniformly spaced by a distance d from each other along said row, said process using a machine comprising a straddling tunnel (5) equipped with a pruner (6), said pruner comprising two pruning harrows (7) disposed each on opposite sides of said tunnel, said harrows being reversibly operable into an open state wherein they are moved apart, said process providing for driving the machine at a speed V along the row while keeping said row within the straddling tunnel (5) in order to prune it from each side between the pruning harrows (7), and for operating said harrows in their open state upon the passage of each post between them, said process being **characterized in that** the opening of the pruning harrows (7) is operated by means of an automatic procedure (H) utilizing parameters which are determined by a previous learning stage (E) monitoring several successive manual openings (E1) of the pruning harrows (7) to determine an opening time period (T_{ON}) necessary for the passage of a post at the driving speed V and an interval time period (T_{period}) separating said openings, said opening and interval time periods being applied during the automatic procedure (H).

2. Process according to claim 1, **characterized in that** the automatic procedure (H) is triggered after the completion of a predetermined number of manual openings (E1) of the pruning harrows (7) during the learning stage (E).

3. Process according to claims 1 or 2, **characterized in that** opening (T_{ON}) and interval (T_{period}) time periods are measured during the learning stage (E), the averages of said measured time periods being applied during the automatic procedure (H).

4. Process according to claim 3, **characterized in that** the automatic procedure (H) is triggered after verifying whether the measured opening (T_{ON}) and/or interval (T_{period}) time periods are within a given margin.

5. Process according to any of claims 1 to 4, **characterized in that** the automatic procedure (H) starts at an initial time (J) which is manually triggerable.

6. Process according to any of claims 1 to 5, **characterized in that** the automatic procedure (H) is started by an initial opening (J) of the pruning harrows (7).

7. Process according to any of claims 1 to 6, **characterized in that** it provides for a manual reset action (R) for interrupting the automatic procedure (H) in order to either complete a new learning stage (E) or to manually operate the pruning harrows (7).

8. Process according to any of claims 1 to 7, **characterized in that** it provides for a manual action for initiating the learning stage (E).

9. Process according to any of claims 1 to 8, **characterized in that** the learning stage (E) is initiated after the verification that the driving speed V is within a given margin.

10. Machine comprising a motorized chassis (1) to be moved at a driving speed V along a row of plants supported by posts which are substantially uniformly spaced by a distance d from each other, said machine comprising a straddling tunnel (5) operable for placing over said row during the movement of the machine, said straddling tunnel being equipped with a pruner (6) comprising two pruning harrows (7) disposed each on opposite sides of said tunnel in order to be able to prune the row from each side between the pruning harrows (7), said machine comprising a device for reversibly operating the harrows (7) in an open state wherein they are moved apart, said device comprising control means operable for implementing a process according to any of claims 1 to 9.

11. Machine according to claim 10, **characterized in that** the operating device comprises a button for manually opening the pruning harrows (7).

12. Machine according to claims 10 or 11, **characterized in that** the operating device comprises a button for manually initiating the learning stage (E).
